# EUROPEAN PATENT APPLICATION

(11) **EP 4 697 388 A1**
(43) Date of publication of application: **18.02.2026**
(21) Application number: 24846112.1
(22) Date of filing: 23.07.2024
(51) Int. Cl.: H01M 4/04, B65H 43/04, G06Q 50/04

(54) **ROLL MAP GENERATION SYSTEM, AND METHOD FOR GENERATING ROLL MAP**

(30) Priority: 26.07.2023 KR 20230097120
(71) Applicant: LG Energy Solution, Ltd., Seoul 07335 (KR)
(72) Inventor: MOON, Ji Moon, Daejeon 34122 (KR); BAE, In Bong, Daejeon 34122 (KR); PARK, Wi Dae, Daejeon 34122 (KR); SEO, Dong Min, Daejeon 34122 (KR); SIM, Min Kyu, Daejeon 34122 (KR); KIM, Min Su, Daejeon 34122 (KR); PARK, Jong Seok, Daejeon 34122 (KR)
(74) Representative: BCKIP Part mbB
(86) International application number: PCT/KR2024/095932
(87) International publication number: WO 2025/023812

(57) **Abstract**

According to exemplary embodiments, a method for generating a roll map is provided. The method comprises the steps of: collecting measurement data including measurement values of an electrode sheet on the basis of a measurement signal generated by measuring the electrode sheet, the electrode sheet including a plurality of coated part lanes and a plurality of uncoated parts; and processing the measurement data such that the plurality of coated part lanes are differentiated.

## Description

### [Technical Field]

The present invention relates to a system configured to generate a roll map indicating a lot that is a unit of a wound electrode sheet, and a roll map generating method. The present application claims the benefit of priority based on Korean Patent Application No. 10-2023-0097120, filed on July 26, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a system configured to generate a roll map including information about quality and defects in an electrode manufacturing process.

### [Technical Solution]

Example embodiments of the present invention provide a roll map generating method. The roll map generating method includes: collecting measurement data, which includes measured values of an electrode sheet, based on a measurement signal generated by measuring the electrode sheet including a plurality of coated lanes and a plurality of uncoated parts; and processing the measurement data to differentiate between the plurality of coated lanes.

The processing of the measurement data may include determining the number of the plurality of coated lanes.

The roll map generating method may further include comparing the number of the plurality of coated lanes determined by processing the measurement data with process information of the electrode sheet.

The roll map generating method may further include setting a representative value of undifferentiated data of the measurement data as a reference value, when the number of the plurality of coated lanes determined by processing the measurement data is different from the process information of the electrode sheet.

The number of the plurality of coated lanes determined by processing the measurement data may be less than the number of the plurality of coated lanes of the process information of the electrode sheet.

The roll map generating method may further include calibrating the representative value of the undifferentiated data of the measurement data.

The electrode sheet may include a first section and a second section, the number of the plurality of coated lanes determined from the measurement data of the first section may be the same as process information of the electrode sheet, the number of the plurality of coated lanes determined from the measurement data of the second section may be different from the process information of the electrode sheet, and a representative value of the measurement data of the second section may be calibrated based on a representative value of the measurement data of the first section.

The first section and the second section may be neighboring to each other.

The electrode sheet may include a first section to a third section, the number of the plurality of coated lanes determined from the measurement data of the first and second sections may be the same as the process information of the electrode sheet, the number of the plurality of coated lanes determined from the measurement data of the third section may be different from the process information of the electrode sheet, and a representative value of the measurement data of the third section may be calibrated based on representative values of the measurement data of the first and second sections.

The representative value of the measurement data of the third section may be set to a mean of the representative values of the measurement data of the first and second sections.

A width of each of the plurality of coated lanes of the third section may be determined based on the process information.

The electrode sheet may include a first section to a third section, the number of the plurality of coated lanes determined from the measurement data of the first and second sections may be the same as process information of the electrode sheet, the number of the plurality of coated lanes determined from the measurement data of the third section may be different from the process information of the electrode sheet, and a representative value of the measurement data of the third section may be calibrated based on a representative value of the measurement data of the first section.

The first section may be spaced apart from the third section with the second section therebetween.

The representative value of the third section may be set to the representative value of the first section.

### [Advantageous Effects]

Example embodiments of the present invention provide a system for generating a roll map that enables feedback, feedforward, and tracking of an electrode process.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a roll map generating system according to example embodiments.
FIG. 2 is a plan view of a part of an electrode sheet.
FIG. 3 is a graph showing an amount of measuring an electrode sheet.
FIG. 4 is a graph showing an amount of measuring an electrode sheet.
FIG. 5 is a flowchart of a roll map generating method according to example embodiments.
FIG. 6 illustrates a roll map generating system according to example embodiments.
FIG. 7 illustrates a roll map generating system according to example embodiments.
FIG. 8 illustrates a roll map generating system according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

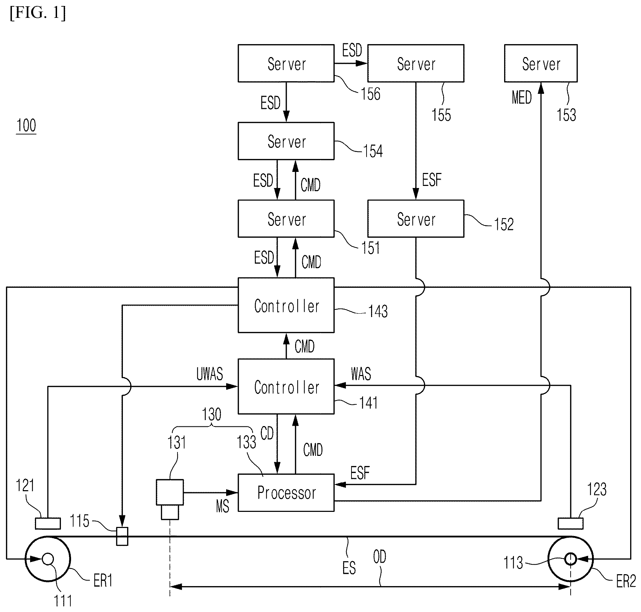

FIG. 1 illustrates a roll map generating system 100 according to example embodiments.

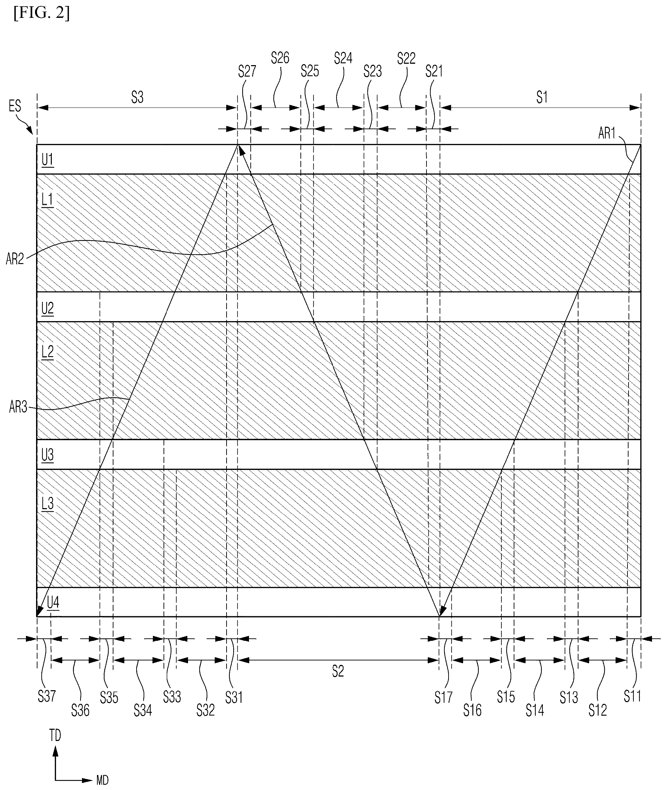

FIG. 2 is a plan view of a part of an electrode sheet ES.

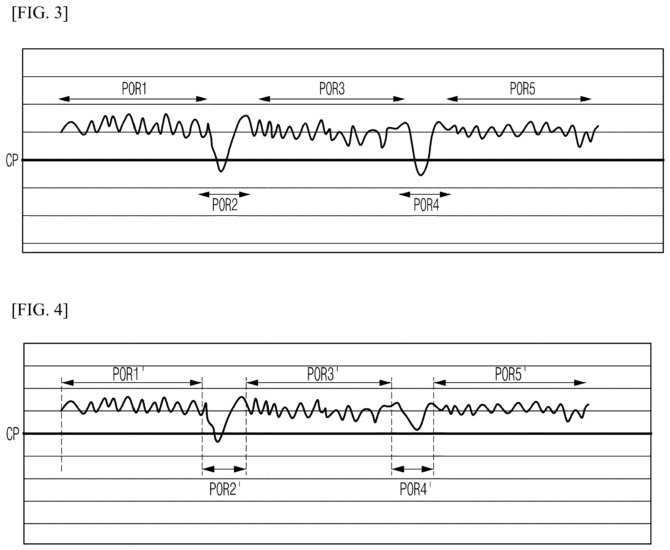

FIGS. 3 and 4 are graphs showing measurement data MED collected from the electrode sheet ES. In FIGS. 3 and 4, a vertical axis represents the amount of measurement and a horizontal axis represents time. In FIGS. 3 and 4, the horizontal axis and the vertical axis are expressed in arbitrary units.

Referring to FIGS. 1 to 4, the roll map generation system 100 may include an unwinder 111, a rewinder 113, a processing apparatus 115, a first rotary encoder 121, a second rotary encoder 123, a measuring device 130, a first controller 141, a second controller 143, and servers 151, 152, 153, 154, 155, and 156.

The roll map generating system 100 may be configured to generate a roll map including data about an electrode sheet ES. The roll map may represent the electrode sheet ES based on coordinates indicating a position on the electrode sheet ES. A secondary battery manufacturing process may be performed on the electrode sheet ES. The roll map may indicate a history of processes performed on the electrode sheet ES and include data related to coordinates. Accordingly, the roll map enables feedback, feedforward, and tracking of a secondary battery manufacturing process as described below.

A first electrode roll ER1 on which a previous process is performed may be loaded on the unwinder 111. The unwinder 111 may be configured to unwind the electrode sheet ES from the first electrode roll ER1. The rewinder 113 may be configured to wind the electrode sheet ES to form a second electrode roll ER2. Accordingly, the electrode sheet ES may be moved between the unwinder 111 and the rewinder 113. An electrode process is performed on the electrode sheet ES unwound from the first electrode roll ER1 and wound into the second electrode roll ER2 and thus may be a roll-to-roll process.

Roll maps may be generated in units of lots. The electrode sheet ES may be wound into the second electrode roll ER2 and be cut and separated after a certain winding length is reached. A lot is a production unit of the roll-to-roll process, and the separated second electrode roll ER2 is an example of lot. Accordingly, the server 154 may be configured to store a roll map of a previous process. The roll map of the previous process may correspond to the first electrode roll ER1. In addition, the server 154 may be configured to generate and store a roll map of a current process. The roll map of the current process may correspond to the second electrode roll ER2.

In a roll map, time series data constructed over time (i.e., according to the progress of a process) may be related to coordinate data CD collected based on the amount of movement (i.e., the amount of winding or the amount of unwinding) of the electrode sheet ES.

The manufacture of a secondary battery involves a series of different processes, and a leading process affects the following process. In this case, when time series data of the leading process does not directly match a workpiece, an intermediate product, and a product of the real world, it is difficult to reflect the time series data of the leading process in the following process. Hereinafter, correcting the following process on the basis of data generated according to a result of the leading process will be referred to as feedforward.

Here, the workpiece is an article provided as a result of each process, e.g., the electrode sheet ES of FIG. 1 on which the coating process, the roll pressing process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data of a roll map should be related with positions on workpieces, components, intermediate products, and products of the real world. The roll map may allow the time series data to be related with coordinate data including coordinates of the positions on the workpieces, the components, the intermediate products, and the products of the real world. The roll map may provide matching between the time series data and the workpieces, the components, the intermediate products, and the products of the real world, based on the coordinate data. Accordingly, generation of the roll map and feedforward based on the roll map may improve the productivity and quality of the secondary battery manufacturing process by digitizing and objectifying aspects of a process that depend on an operator's discretion. A roll map of a preceding lot may be used to improve a process of a subsequent lot and this operation may be referred to as process feedback. The process feedback using the roll map may include identifying process conditions and process parameters that cause a problem and a defect, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event such as a quality issue occurs in an already shipped battery cell, history data of the manufacture of the battery cell may be retrieved based on the cell ID to identify a cause of a problem in the manufacture of the battery cell.

The electrode sheet ES may be processed by the processing apparatus 115. For example, the processing apparatus 115 may include a coater, and the electrode sheet ES may be coated with an electrode slurry. As another example, the processing apparatus 115 may include a pressing roll, and the roll pressing process may be performed on the electrode sheet ES coated with the electrode slurry. As another example, the processing apparatus 115 may include a splicing die and a scrap port, and a part of the electrode sheet ES may be scrapped. As another example, the processing apparatus 115 may include a slitting knife, and the electrode sheet ES may be separated into a plurality of electrode sheets.

The coating process is a process of applying a coating material such as the electrode slurry onto the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet having the broad width may be cut according to the specifications of a battery cell.

The first rotary encoder 121 may be configured to sense the amount of the electrode sheet ES unwound from the first electrode roll ER1 by the unwinder 111. Accordingly, the first rotary encoder 121 may be configured to generate an unwinding amount signal UWAS indicating an unwinding amount of the electrode sheet ES. The first rotary encoder 121 may be configured to transmit the unwinding amount signal UWAS to the first controller 141. The first controller 141 may be configured to collect unwinding amount data based on the unwinding amount signal UWAS of the electrode sheet ES.

The second rotary encoder 123 may be configured to sense the amount of the electrode sheet ES wound into the second electrode roll ER2 by the rewinder 113. Accordingly, the second rotary encoder 123 may be configured to generate a winding amount signal WAS indicating a winding amount of the electrode sheet ES. The second rotary encoder 123 may be configured to transmit the winding amount signal WAS to the first controller 141. The first controller 141 may be configured to collect winding amount data based on the winding amount signal WAS of the electrode sheet ES.

In some cases, a part of the electrode sheet ES may be scrapped and thus the amount of the electrode sheet ES unwound by the unwinder 111 may be different from the amount of the electrode sheet ES wound by the rewinder 113. When the electrode sheet ES is stretched due to pressure in the roll pressing process, the amount of the electrode sheet ES unwound by the unwinder 111 may be different from the amount of the electrode sheet ES wound by the rewinder 113.

The first controller 141 may be configured to collect the coordinate data CD of the electrode sheet ES, based on one of the winding amount signal WAS and the unwinding amount signal UWAS of the electrode sheet ES. For example, the first controller 141 may determine a moving distance of the electrode sheet ES in a current process step based on the winding amount signal WAS of the electrode sheet ES. Furthermore, by calibrating coordinates using an offset length OD, a relative position of each of processed or sensed parts of the electrode sheet ES on the electrode sheet ES may be identified. Accordingly, a coordinate indicating a relative position of a part of the electrode sheet ES to be wound by the rewinder 113 on the electrode sheet ES may be determined at each point in time when the roll-to-roll process is performed on the electrode sheet ES. Hereinafter, the technical idea of the present invention will be described with respect to an embodiment in which the first controller 141 collects the coordinate data CD based on the winding amount signal WAS of the electrode sheet ES.

The coordinate data CD may include coordinates matching each part of the electrode sheet ES. That is, each of arbitrary points on the electrode sheet ES may match a coordinate. The coordinate may be one-dimensional (1D) quantity in a machine direction MD (or a longitudinal direction) of the electrode sheet ES but is not limited thereto. The coordinate may be two-dimensional (2D) quantity in the machine direction MD and a transverse direction TD (or a width direction) of the electrode sheet ES.

A sensing part 131 of the measuring device 130 may be configured to measure the electrode sheet ES to collect measurement data MED of the electrode sheet ES. The sensing part 131 may measure the electrode sheet ES by a scanning method. The sensing part 131 may be configured to scan the electrode sheet ES in the transverse direction TD. While the measuring device 130 performs scanning in the transverse direction TD, the electrode sheet ES may be moved in the machine direction MD by the unwinder 111 and the rewinder 113.

In FIG. 2, arrows AR1, AR2 and AR3 indicate a movement of the sensing part 131 of the measuring device 130 relative to the electrode sheet ES. The arrows AR1 and AR3 indicate scanning performed by the sensing part 131 from a first edge of the electrode sheet ES to a second edge of the electrode sheet ES in the transverse direction TD, and the arrow AR2 indicates scanning performed by the sensing part 131 from the second edge of the electrode sheet ES to the first edge of the electrode sheet ES in the transverse direction TD.

Here, coated lanes L1, L2, and L3 are parts of the electrode sheet ES that are coated with an electrode slurry, and uncoated parts U1, U2, U3, and U4 are parts of the electrode sheet ES that are not coated with the electrode slurry. The uncoated parts U1, U2, U3, and U4 may be interposed between the coated lanes L1, L2, and L3 or be on opposite ends of the electrode sheet ES in the transverse direction TD.

The measurement data MED may include a plurality of measured values expressed numerically. For example, the measurement data MED may include dimension data, e.g., a thickness and a width, of the electrode sheet ES, data of the amount of loading a coating material on the electrode sheet ES, dimension data, e.g., a width of an insulating material on the coating material and an overlapping width between the coating material and the insulating material, mismatch data between the coated lanes L1, L2 and L3 on an upper surface of the electrode sheet ES and the coated lanes L1, L2 and L3 on a lower surface of the electrode sheet E, and the like. Here, the loading amount is the amount of the coating material loaded per unit area of the electrode sheet ES, and may be an area density of the coating material.

The measuring device 130 may include the sensing part 131 and a processor 133. The sensing part 131 may be configured to sense a physical quantity of the electrode sheet ES to generate a measurement signal MS. For example, the sensing part 131 may include a time delay and integration (TDI) camera, a complementary metal oxide semiconductor (CMOS) image sensor, a time-of-flight (TOF) sensor, etc. The sensing part 131 may include an emitter and a receiver that are configured to perform measurement using a non-destructive signal such as ultrasound waves, microwaves, terahertz waves, or infrared rays. The sensing part 131 may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 130 may include a pressure sensor, a temperature sensor, an ultrasonic sensor, a proximity sensor, a door state sensor, a motion tracking sensor, a humidity sensor, a visible light and infrared sensor, a camera, etc.

Hereinafter, the technical idea of the present invention will be described with respect to, as a non-limiting example, an embodiment in which the measuring device 130 is a loading amount gauge configured to measure the amount of loading a coating layer on a sheet material SM (e.g., a web gauge of Thermofisher Scientific) or a thickness gauge and the measurement data MED includes one of loading amounts or thicknesses. Those of ordinary skill in the art would be able to derive an embodiment in which a measuring device includes one of the above-described sensors and is configured to sense one of the above-described measured amounts.

The roll map generating system 100 may further include an inspector configured to inspect the electrode sheet ES to collect inspection data. The inspection data may include a judgement of the quality of a part of the electrode sheet ES and a process event. For example, the inspection data may include data about the appearance of the electrode sheet ES collected by an image-based inspection device such as a vision machine, data about disconnections and seams on the electrode sheet ES, data about a part of the electrode sheet ES on which sampling inspection is performed, data about a part of the electrode sheet ES to be scrapped, data about the scraped part of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects. The datum points may be formed on the electrode sheet ES at certain intervals, and other elements on the electrode sheet ES may be located based on the datum points. The inspector may be a color sensor, a joint sensor, a datum point sensor, or a vision machine.

The measurement data MED and the inspection data described above may be time series data. The measurement data MED and the inspection data may be temporally ordered. Temporal ordering is a main feature of time series data. Temporal ordering is organizing events in an order in which they occur and arrive to be processed. That is, the measurement data MED and the inspection data may be stored based on point in times when measurement and inspection are performed and may be related to time. Accordingly, each of measured values of the measurement data MED may be matched to time, and each of inspection values of the inspection data may be matched to time.

For example, the measurement data MED may have a series of measured values and time values related to the series of measured values. The measured values and the time values may be matched in a one-to-one manner but are not limited thereto. As another example, the defect data may include a value indicating a defect and a time value related to the value indicating the defect. Here, the values indicating defects should be understood to mean that the values include information regarding at least one of the presence of defects and the types of defects.

The processor 133 may be configured to collect measurement data MED based on the measurement signal MS sensed by the sensing part 131. The processor 133 may be connected to the sensing part 131 by wire or wirelessly. The processor 133 may be configured to calibrate the measurement data MED by adding an offset measurement amount to each of the measured values of the measurement data MED. Due to the progress of a process and the aging of equipment, the measured values of the measurement data MED may be different from actual values. The processor 133 may calibrate the measured values of the measurement data MED based on the offset measurement amount to improve the reliability of the roll map generating system 100 and a roll map generating method. The offset measurement amount may be determined based on information given to an equipment system by a method such as a sample test.

According to example embodiments, the processor 133 may be configured to receive an electrode specification file ESF. The electrode specification file ESF may be transmitted to the processor 133 from the server 155 described below through the server 152. A file format of the electrode specification file ESF may be a JavaScript Object Notation (JSON) format but is not limited thereto. The electrode specification file ESF may be in a file format allowing data to be stored based text, such as an extendable markup language (XML), a common separated value (CSV), a resource description framework (RDF), a spreadsheet, an open document format (ODF), a portable document format (PDF), a plane text file, or a hypertext markup language (HTML).

The electrode specification file ESF may be stored in the processor 133. The electrode specification file ESF may be stored in a memory device of the processor 133. The memory device of the processor 133 may include an electrically erasable programmable read-only memory (EPROM), a solid state drive (SSD), or a hard disk drive (HDD).

The electrode specification file ESF may include information of a process performed on the electrode sheet ES. More specifically, the electrode specification file ESF may include the number of the coated lanes L1, L2, and L3, the number of uncoated parts U1, U2, U3, and U4, a width of each of the coated lanes L1, L2, and L3, a width of each of the uncoated parts U1, U2, U3, and U4, and a range of normal measurement amounts (i.e., loading amounts).

The processor 133 may be configured to update measurement conditions based on the electrode specification file ESF. The measurement conditions may include the number of the coated lanes L1, L2, and L3, the number of uncoated parts U1, U2, U3, and U4, the width of each of the coated lanes L1, L2, and L3, the width of each of the uncoated parts U1, U2, U3, and U4, and the range of normal measurement amounts (i.e., loading amounts).

When a recipe for the electrode sheet ES is updated due to a change of a model of a manufactured battery cell, the measurement conditions of the measuring device 130 should also be updated. When there is a change in specifications of a battery cell to be manufactured through the electrode sheet ES, the processing of the electrode sheet ES and the processing of the measurement data MED are changed accordingly.

For example, as shown in FIG. 2, the processing of measurement data MED collected from the electrode sheet ES including three coated lanes L1, L2, and L3 may be different from the processing of measurement data collected from an electrode sheet including only a single coated lane. For more accurate feed forward after the secondary battery manufacturing process and the coating process, the measurement data MED should be matched to objects to be collected (i.e., the coated lanes L1, L2, and L3). The coated lanes L1, L2, and L3 can be individually scrapped when a defect occurs and the productivity and yield of the secondary battery manufacturing process can be increased through the matching between parts of the measurement data MED and the coated lanes L1, L2, and L3.

For matching between a first part of the measurement data MED collected from the coated lane L1 and the coated lane L1, it should be identified that the first part of the measurement data MED has been collected from the coated lane L1. For matching between a second part of the measurement data MED collected from the coated lane L2 and the coated lane L2, it should be identified that the second part of the measurement data MED has been collected from the coated lane L2. For matching between a third part of the measurement data MED collected from the coated lane L3 and the coated lane L3, it should be identified that the third part of the measurement data MED has been collected from the coated lane L3.

For matching between the first to third parts of the measurement data MED and the coated lanes L1, L2, and L3, the processor 133 may be configured to process the measurement data MED based on updated measurement conditions. By updating the measurement conditions, the processor 133 may be aware that the measurement data MED is collected from the coated lanes L1, L2, and L3 and thus the processor 133 may be configured to perform an operation for identifying an object of the measurement data MED to be collected. Furthermore, the electrode sheet ES may be determined as defective when the number of coated lanes set according to electrode specification data ESD or the electrode specification file ESF (i.e., the number of coated lanes to be formed on the electrode sheet ES by a die coater) is different from the number of sensed coated lanes.

Conventionally, the electrode specification data ESD of the server 156 that includes an ID of a model and a recipe of the model is not automatically updated by the measuring device 130, and measurement conditions are manually updated by an operator. When the measurement conditions are manually updated by the operator, the measurement conditions may be misspecified and the misspecficiation of the measurement conditions may result in a large-scale judgement error with respect to the quality of the electrode sheet ES.

According to example embodiments, the server 155 may be configured to generate the electrode specification file ESF based on the electrode specification data ESD transmitted from the server 156. The electrode specification file ESF may be transmitted to the processor 133 through the server 152. Because the measurement conditions of the processor 133 are automatically updated based on the electrode specification file ESF, misspecification of the measurement conditions may be prevented and the reliability of a roll map may be improved.

The processor 133 may be configured to calculate widths of the coated lanes L1, L2, and L3 based on the measurement data MED. When measured values of the electrode sheet ES that are greater than or equal to a threshold CP among the measured values of the measurement data MED appear consecutively for a number equal to or greater than a set number, the processor 133 may match data points subsequent to the series of measured values to coated parts. Similarly, when measured values of the electrode sheet ES that are less than the threshold CP among the measured values of the measurement data MED appear consecutively for a number equal to or greater than the set number, the processor 133 may match measured values of the electrode sheet ES subsequent to the series of measured values to uncoated parts.

The processor 133 may be configured to compare the measurement data MED with the electrode specification file ESF. More specifically, the processor 133 may be configured to compare the number of the coated lanes L1, L2, and L3, the number of the uncoated parts U1, U2, U3, and U4, the width of each of the coated lanes L1, L2, and L3, and the width of each of the uncoated parts U1, U2, U3, and U4, which are determined based on the measurement data MED, with the information of the process of the electrode sheet ES of the electrode specification file ESF. The processor 133 may be configured to determine whether the electrode sheet ES is defective, based on the measurement data MED and the electrode specification file ESF.

The processor 133 may be configured to identify incorrect measurement data MED, based on the measurement data MED and the electrode specification file ESF. Examples of the incorrect measurement data MED may include inconsistency between the number of the coated lanes L1, L2, and L3 and the electrode specification data ESD, misrecognition of the positions of the uncoated parts U1, U2, U3, U4, absence of sensing of a measurement amount (i.e., a loading amount or thickness), and the like. In general, a loading amount and a thickness may be measured by a thermodynamic method and incorrectly sensed due to thermal development caused by various aspects of processes.

When some of the uncoated parts U1, U2, U3, and U4 are not identified by the processor 133, the number of the coated lanes L1, L2, and L3 may be different from the process information of the measurement condition updated according to the electrode specification file ESF. When some of the uncoated parts U1, U2, U3, and U4 are not identified by the processor 133, the number of the coated lanes L1, L2, and L3 may be less than the number of the coated lanes L1, L2 and L3 of the process information of the measurement condition updated according to the electrode specification file ESF.

In this case, parts of the measurement data MED that are collected from the coated lanes L1, L2, and L3 are not identified and thus the measurement data MED and the coated lanes L1, L2, and L3 may not match normally. In this case, pieces of coordinate-related measurement data CMD of the coated lanes L1, L2, and L3 may not be collected to be differentiated from one another and thus an error may occur in the generation of a roll map.

According to example embodiments, the processor 133 may be configured to set a representative value of undifferentiated data of the measurement data MED as a reference value to collect the coordinate-related measurement data CMD. Here, the reference value may be, for example, zero but is not limited thereto. The reference value may be an arbitrary value indicating that the coated lanes L1, L2, and L3 are not identified to be differentiated from one another. The representative value set as the reference value may be included in the coordinate-related measurement data CMD.

Here, the measurement data MED may be divided through a comparison between the measured values of the measurement data MED and the threshold CP as described below. For example, in the measurement data MED of FIG. 3, boundaries of first to fifth parts POR1, POR2, POR3, POR4, and POR5 may be differentiated based on the threshold CP. Accordingly, the first part POR1 may be matched to the coated lane L1, the second part POR2 may be matched to the uncoated part U2, the third part POR3 may be matched to the coated lane L2, the fourth part POR4 may be matched to the uncoated part U3, and the fifth part POR5 may be matched to the coated lane L3.

On the other hand, in the measurement data MED of FIG. 4, boundaries of first to third parts POR1', POR2', and POR3' may be differentiated based on the threshold CP but boundaries of the third to fifth parts POR3', POR4', and POR5' may not be differentiated based on the threshold CP. Accordingly, the first part POR1' may be matched to the coated lane L1, and the second part POR2' may be matched to the uncoated part U2 but the third to fifth parts POR3', POR4', and POR5' may be recognized together as a single coated lane.

The undifferentiated data of the measurement data MED is a part of the measurement data MED in which all boundaries of the coated lanes L1, L2, and L3 are unknown due to nonrecognition of the uncoated parts U1, U2, U3, and U4. For example, that all the boundaries of the coated lanes L1, L2, and L3 are unknown may be understood to mean that the coated lanes L1 and L2 are recognized together as a single coated lane due to nonrecognition of the uncoated part U2, the coated lanes L2 and L3 are recognized together as a single coated lanes due to nonrecognition of the uncoated part U3, or the coated lanes L1, L2 and L3 are recognized together as a single coated lanes due to nonrecognition of the uncoated parts U2 and U3.

According to example embodiments, when some of the coated lanes L1, L2, and L3 are not recognized, the processor 133 may be configured to differentiate between the unrecognized coated lanes among the coated lanes L1, L2, and L3 and the uncoated parts U1, U2, U3, and U4, based on the measurement condition updated according to the electrode specification file ESF. According to example embodiments, when some of the coated lanes L1, L2, and L3 are not recognized, the processor 133 may be configured to determine widths of the unrecognized coated lanes among the coated lanes L1, L2, and L3 based on the measurement condition updated according to the electrode specification file ESF.

According to example embodiments, the processor 133 may be configured to calibrate a representative value of the coordinate-related measurement data CMD set as a reference value because of the undifferentiated data of the measurement data MED.

For example, the representative value of the coordinate-related measurement data CMD set as the reference value may be calibrated based on an adjacent representative value. More specifically, when a representative value of a scanning region S3 of FIG. 2 is set as a reference value, the representative value of the scanning region S3 may be set to a representative value of a scanning region S2.

As another example, the representative value of the coordinate-related measurement data CMD set as the reference value may be calibrated based on adjacent representative values. That is, the representative value of the coordinate-related measurement data CMD set as the reference value may be calibrated based on two or more representative values. More specifically, when the representative value of the scanning region S3 of FIG. 2 is set as a reference value, the representative value of the scanning region S3 may be set to a mean of a representative values of scanning regions S1 and S2.

The first controller 141 may be in operative communication with the first and second rotary encoders 121 and 123, the measuring device 130, and additional measuring devices and inspectors through a wired or wireless data network. The data network may be unidirectional or bidirectional. The data network may be implemented by a physical channel, WiFi, public networks and/or specialized networks using Bluetooth or other frequency bands. The first and second rotary encoders 121 and 123, the measuring device 130, and the additional measuring devices and inspectors may be configured to collect data from equipment, a workpiece, an intermediate product, and a product in the roll map generating system 100 or to generate a signal for collecting data from thereof.

The first controller 141 may be configured to transmit the coordinate data CD to the processor 133. The processor 133 may be configured to relate the coordinate data CD with the measurement data MED to generate the coordinate-related measurement data CMD. In general, the measurement data MED may be processed based on a trigger point.

As a non-limiting example, a trigger point for processing the measurement data MED may be the completion of scanning. For example, the sensing part 131 may scan the electrode sheet ES in the width direction of the electrode sheet ES, and the measurement data MED may be stored, processed, manipulated, and transmitted whenever scanning is performed. As another example, the trigger point may be completion of performing scanning a plurality of times or partial completion of scanning. Examples of the processing of the measurement data MEd may include storing the measurement data MED, manipulating the measurement data MED (e.g., generating the coordinate-related measurement data CMD), and transmitting the measurement data MED.

According to example embodiments, the measuring device 130 may be configured to calibrate the coordinate data CD, based on a position of the sensing part 131. More specifically, the measuring device 130 may be configured to calibrate the coordinate data CD based on the offset length OD, so that coordinates of the coordinate data CD may be related with the measured values of the measurement data MED.

The measuring device 130 may collect measurement data MED of a part corresponding to (e.g., overlapping) the sensing part 131 and the coordinate data CD is collected by the second rotary encoder 123 spaced apart from the sensing part 131 as described above, and thus, a part of the electrode sheet ES corresponding to the winding amount signal WAS generated at the same time point and a part of the electrode sheet ES corresponding to the measurement signal MS may be different from each other.

According to example embodiments, the processor 133 may be configured to calibrate the coordinate data CD collected at the same time as the measurement data based on the offset length OD, and to relate representative coordinates (e.g., a start coordinate and an end coordinate) of the calibrated coordinate data CD with the representative values of the measured values of the measurement data MED to collect the coordinate-related measurement data CMD. The measured values of the measurement data MED may be matched to times, and measured values of the coordinate-related measurement data CMD may be matched to the calibrated representative coordinates (e.g., the start coordinate and the end coordinate).

A plurality of guide rolls may be interposed between the sensing part 131 and the rewinder 113 to define a moving path of the electrode sheet ES. Accordingly, the offset length OD may be defined as a length of the electrode sheet ES between the sensing part 131 and the rewinder 113 according to the moving path of the electrode sheet ES. The offset length OD may be equal to or greater than a linear distance between the sensing part 131 and the rewinder 113.

The processor 133 may be configured to collect the coordinate-related measurement data CMD based on the measurement data MED and the coordinate data CD. The electrode sheet ES may include a plurality of scanning regions S1, S2 and S3. Each of the plurality of scanning regions S1, S2 and S3 is a part of the electrode sheet ES inspected by performing scanning once by the sensing part 131. The scanning region S1 may include a plurality of sections S11, S12, S13, S14, S15, S16, and S17. The scanning region S2 may include a plurality of sections S21, S22, S23, S24, S25, S26, and S27. The scanning region S3 may include a plurality of sections S31, S32, S33, S34, S35, S36, and S37.

The coordinate-related measurement data CMD may include representative values calculated from measured values of measurement data MED of each of the sections S11, S12, S13, S14, S15, S16, S17, S21, S22, S23, S24, S25, S26, S27, S31, S32, S33, S34, S35, S36, and S37 of the electrode sheet ES. The representative values of each of the sections S11, S12, S13, S14, S15, S16, S17, S21, S22, S23, S24, S25, S26, S27, S31, S32, S33, S34, S35, S36, and S37 of the electrode sheet ES may include at least one of a mean, a standard deviation, a median value, a maximum value or a minimum value of the measurement data MED corresponding thereto.

The coordinate-related measurement data CMD may include representative coordinates (e.g., a start coordinate and an end coordinate) of each of the sections S11, S12, S13, S14, S15, S16, S17, S21, S22, S23, S24, S25, S26, S27, S31, S32, S33, S34, S35, S36, and S37 of the electrode sheet ES. Each of the representative values of the coordinate-related measurement data CMD may be matched to the representative coordinates (e.g., the start coordinate and the end coordinate) of a corresponding section among the sections S11, S12, S13, S14, S15, S16, S17, S21, S22, S23, S24, S25, S26, S27, S31, S32, S33, S34, S35, S36, and S37.

The sections S11, S21 and S31 may correspond to the uncoated part U1. The sections S12, S22 and S32 may correspond to the coated lane L1. The sections S13, S23, and S33 may correspond to the uncoated part U2. The sections S14, S24 and S34 may correspond to the coated lane L2. The sections S15, S25 and S35 may correspond to the uncoated part U3. The sections S16, S26 and S36 may correspond to the coated lane L3. The sections S17, S27 and S37 may correspond to the uncoated part U4.

To calculate the representative values of the coordinate-related measurement data CMD, the processor 133 may be configured to match the measured values of the measurement data MED. When measured values of the electrode sheet ES that are greater than or equal to the threshold CP among the measured values of the measurement data MED appear consecutively for a number equal to or greater than a set number (e.g., 5), the processor 133 may be configured to match data points subsequent to the series of measured values to the coated lanes L1, L2 and L3.

Similarly, when measured values of the electrode sheet ES that are less than the threshold CP among the measured values of the measurement data MED appear consecutively for a number equal to or greater than the set number, the processor 133 may match measured values of the electrode sheet ES subsequent to the series of measured values to the uncoated parts U1, U2, U3 and U4. On the other hand, when measured values less than or equal to the threshold CP among measured values of a part of the measurement data MED appear consecutively for a number equal to or greater than the set number, the processor 133 may identify that the part of the measurement data MED does not include uncoated parts.

For example, when the section S11 is scanned, the measurement values of the electrode sheet ES may be less than the threshold CP, and measurement data MED collected from the section S11 may be determined to be collected from the uncoated part U1 and be matched to the section S11.

When the section S12 is scanned after the scanning of the section S11, the number of a consecutive measured values of the electrode sheet ES that are greater than or equal to the threshold CP is greater than or equal to the set number and thus measurement data MED collected from the section S12 may be determined to be collected from the coated lane L1 and be matched to the section S12.

When the section S 13 is scanned after the scanning of the section S12, the number of a consecutive measured values of the electrode sheet ES that are less than the threshold CP is greater than or equal to the set number and thus measurement data MED collected from the section S13 may be determined to be collected from the uncoated part U2 and be matched to the section S13.

When the section S 14 is scanned after the scanning of the section S13, the number of a consecutive measured values of the electrode sheet ES that are greater than or equal to the threshold CP is greater than or equal to the set number and thus measurement data MED collected from the section S14 may be determined to be collected from the coated lane L2 and be matched to the section S14.

When the section S 15 is scanned after the scanning of the section S14, the number of a consecutive measured values of the electrode sheet ES that are less than the threshold CP is greater than or equal to the set number and thus measurement data MED collected from the section S15 may be determined to be collected from the uncoated part U3 and be matched to the section S15.

When the section S 16 is scanned after the scanning of the section S15, the number of a consecutive measured values of the electrode sheet ES that are greater than or equal to the threshold CP is greater than or equal to the set number and thus measurement data MED collected from the section S16 may be determined to be collected from the coated lane L3 and be matched to the section S16.

When the section S17 is scanned after the scanning of the section S16, the number of a consecutive measured values of the electrode sheet ES that are less than the threshold CP is greater than or equal to the set number and thus measurement data MED collected from the section S17 may be determined to be collected from the uncoated part U4 and be matched to the section S17.

Matching of the sections S21, S22, S23, S24, S25, S26, and S27 of the scanning region S2 to the measurement data MED collected therefrom and matching of the sections S31, S32, S33, S34, S35, S36, and S37 of the scanning region S3 to the measurement data MED collected therefrom are substantially the same as that described above with respect to the sections S11, S12, S13, S14, S15, S16, and S17 of the scanning region S 1.

The processor 133 may be configured to match each of the measured values of the measurement data MED of the electrode sheet ES to a corresponding section among the sections S11, S12, S13, S14, S15, S16, S17, S21, S22, S23, S24, S25, S26, S27, S31, S32, S33, S34, S35, S36, and S37. The processor 133 may be configured to calculate a representative value of the measured values of each of the parts of the measurement data MED matched to the sections S11, S12, S13, S14, S15, S16, S17, S21, S22, S23, S24, S25, S26, S27, S31, S32, S33, S34, S35, S36, and S37.

The calculating of the representative value of each of the sections S11, S12, S13, S14, S15, S16, S17, S21, S22, S23, S24, S25, S26, S27, S31, S32, S33, S34, S35, S36, and S37 may be based on measurement conditions updated according to the electrode specification file ESF. That is, the measurement conditions of the processor 133 may be updated based on the number of the coated lanes L1, L2, and L3, the number of the uncoated parts U1, U2, U3, and U4, the width of each of the coated lanes L1, L2, and L3, the width of each of the uncoated parts U1, U2, U3, and U4, and a range of normal measurement amounts (i.e., loading amounts or thicknesses) of the electrode specification file ESF, and the processor 133 may process the measurement data MED to calculate a representative value of each of the sections S11, S12, S13, S14, S15, S16, S17, S21, S22, S23, S24, S25, S26, S27, S31, S32, S33, S34, S35, S36, and S37 based on the updated measurement conditions. Accordingly, the reliability of processing the measurement data MED of the electrode sheet ES may be improved.

The processor 133 may be configured to generate evaluation data based on the coordinate-related measurement data CMD. The evaluation data may include a judgement value of a process of each of a plurality of sections of the electrode sheet ES. The judgement value of the process of each of the plurality of sections of the electrode sheet ES may be determined based on a comparison between a set range and measured values (or a representative value of the measured values).

For example, a representative value within a first range may be determined to be normal, a representative value within a second range greater than the first range may be determined to be excessive, a representative value within a third range greater than the second range may be determined to be very excessive, a representative value within a fourth range less than the first range may be determined to be insufficient, and a representative value within a fifth range less than the fourth range may be determined to be very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 133 may be configured to transmit the coordinate-related measurement data CMD to the first controller 141. The coordinate-related measurement data CMD transmitted to the second controller 143 may be transmitted to the server 154 through the server 151. The second controller 143 and the server 151 may relay communication of data, including the coordinate-related measurement data CMD, between the server 154 and the first controller 141. However, embodiments are not limited thereto. The first controller 141 may directly transmit the coordinate-related measurement data CMD to the server 154.

The second controller 143 may be configured to control operations of the unwinder 111, the rewinder 113, and the processing apparatus 115. The second controller 143 may be configured to generate a signal for operating or stopping the unwinder 111, the rewinder 113, and the processing apparatus 115. The signal for operating or stopping the unwinder 111, the rewinder 113, and the processing apparatus 115 may be generated based on the electrode specification data ESD.

For control of a process, a communication line for connecting the second controller 143 and the server 154 via the server 151 may be installed between the second controller 143 and the server 154. Accordingly, data transmission through the second controller 143 may reduce resources required for the installation of the communication line and ensure efficient data processing and management, compared to a case in which the first and second rotary encoders 121 and 123 and the measuring device 130 directly transmit an unwinding amount signal UWAS, a winding amount signal WAS, and the measurement signal MS to the server 154 and a case in which the first controller 141 directly transmits the coordinate-related measurement data CMD to the server 154.

The server 151 may include a program for communication between the second controller 143 of the manufacturing equipment and the server 154. The server 151 may be implemented by hardware as described below. A language and protocol of the server 154 may be different from a language and protocol of the second controller 143. For example, the language of the server 154 may be SQL, and the language of the second controller 143 may be a ladder diagram.

The server 151 may be a communication server. The server 151 may be configured to convert the electrode specification data ESD transmitted from the server 154 into the language of the second controller 143. In addition, the server 151 may be configured to convert the coordinate-related measurement data CMD into the language of the server 154 and record the coordinate-related measurement data CMD in a database of the server 154.

The electrode specification data ESD may include a product ID and a recipe that identify a model of a product to be manufactured using the electrode sheet ES. More specifically, the recipe of the electrode specification data ESD may include all matters related to the process of the electrode sheet ES, e.g., the number of lots to be processed in a current process, the number of coated lanes to be formed on the electrode sheet ES, process conditions such as temperature, humidity, and pressure, and process parameters such as a moving speed of the electrode sheet ES, a discharge rate of a coating die, and pressure of pressing rolls.

The server 154 may be configured to generate a roll map. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES. A roll map may include the coordinate-related measurement data CMD described above. The roll map may further include inspection data matching the coordinates of the coordinate data CD and additional measurement data matching the coordinates of the coordinate data CD.

According to example embodiments, the server 154 may be a data processing system that supports all activities required to manage the manufacture of a secondary battery, such as work schedule management, work instructions, quality control, and work performance aggregation. The server 154 may be, for example, manufacturing execution system (MES) software. The server 154 may be configured to perform inputting, processing, outputting, and communication of data necessary for the manufacture of electrodes, including the coating process, a press process, and a manufacturing process.

The processor 133 may be configured to transmit the measurement data MED to the server 153. The server 153 may be configured to transmit the measurement data MED to the server 155 in response to an API call from the server 155. The server 155 may be configured to store a roll map, and data of the roll map and raw measurement data MED may be related with each other by loading the measurement data MED to the server 155.

An intermediate roll map may be provided through relation of the data of the roll map with the raw measurement data MED. The intermediate roll map may provide information about the raw measurement data MED to provide statistical production management, in addition to the roll map that provides information about defects and production performance based on the defects. Accordingly, the intermediate roll map may provide additional insights into the quality of a workpiece, the performance of a process, overall equipment effectiveness (OEE) drill down, sensing of anomality, traceability, preventive maintenance, and predictive alerts.

The server 155 may be configured to store and process inspection data of the electrode sheet ES. The server 155 may manage the quality of processing the electrode sheet ES by continuously monitoring the processing of the electrode sheet ES based on the inspection data. According to example embodiments, the server 155 may be a statical process controller (SPC). The server 155 may collect and analyze manufacturing data in almost real time to identify problematic conditions in a timely manner and provide a notification to an operator before potential problems occur.

The server 156 may be a solution to managing all information and processes at all stages of life cycles of products or services of a whole global supply chain. The server 156 may be, for example, a product lifecycle management (PLM) solution. The server 156 may be configured to store data about items, components, products, manuals, requirements, engineering change orders, quality, workflows, etc. The server 156 may be configured to generate and store electrode specification data ESD. The server 156 may be configured to transmit the electrode specification data ESD to the first and second servers 154 and 155.

The processor 133, the first controller 141, the second controller 143, and the servers 151 to 156 may be implemented by hardware, firmware, software, or a combination thereof. For example, the processor 133, the first controller 141, the second controller 143, and the servers 151 to 156 may include computing devices such as workstation computers, desktop computers, laptop computers, and tablet computers. The processor 133, the first controller 141, the second controller 143, and the servers 151 to 156 may include a simple controller, a complex processor such as a microprocessor, a CPU, or a GPU, a processor configured by software, dedicated hardware, or firmware. The processor 133, the first controller 141, the second controller 143, and the servers 151 to 156 may be implemented, for example, by a general-purpose computer or application-specific hardware such as a digital signal processor (DSP), a field programmable gate array (FPGA), or an application specific integrated circuit (ASIC).

The servers 151 to 156 may include a physical server or a cloud server. The servers 151 to 156 may provide data and an analysis result to an operator through various frameworks. A framework may include a protocol that supports data transmission so that a display device may visualize data through a user interface and provide updated visualization when new data is calculated by the servers 151 to 156. The protocol that supports data transmission may employ HTML, JavaScript, and/or JSON.

The servers 151 to 156 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

The roll map generating system 100 may implement a plug-in architecture with an API for collecting data to provide a plug-and-play connection between the measuring device 130 and additional measuring devices and inspectors. Accordingly, resources in a certain process step and a specific site can be easily transferred to a different process and a different site or new resources can be easily introduced into each process step and each site.

A data network between the components of the roll map generating system 100 may include various types of communication channels including unidirectional and bidirectional wired and wireless communications. For example, the data network may include an industrial protocol network such as OPC, Modbus, or ProfiNet. The communication channel may be dedicated conduit communication such as universal serial bus (USB), IEEE 802 (Ethernet), IEEE 1394 (FireWire), or other high-speed data communication standards.

In some embodiments, the roll map generating system 100 may further include a manual input system that allows an operator to input manufacturing data. The roll map generating system 100 may allow an operator to input data using an input tool and a computer-based input of manufacturing data such as Excel file scraping.

According to some embodiments, the operations of the processor 133, the first controller 141, the second controller 143, and the servers 151 to 156 may be implemented as instructions stored on a machine-readable medium that is readable and executable by one or more processors. Here, the machine-readable medium may include an arbitrary mechanism for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processor 133, the first controller 141, the second controller 143, and the servers 151 to 156 may include firmware, software, routines, and instructions for performing the above-described operations or processes to be described below. For example, the processor 133, the first controller 141, the second controller 143, and the servers 151 to 156 may be instantiated in a memory.

The first and second controllers 141 and 143 may be, for example, programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a central process unit (CPU), an input interface, an output interface, a communication interface, and first and second memory devices. The power supply may be configured to supply operating power to the CPU, the input module, the output module, the communication interface, and the first and second memory devices. The first memory device may be configured to store a system program of the PLC. The first memory device may be, for example, a read-only memory (ROM) and be configured to permanently store data for an operating system of the second controller 143. The second memory device may be configured to store a user program and data. The user program may be a program set by a user so that the CPU may perform a specific function. The data may include the coordinate-related measurement data CMD and the coordinate data CD described above. The second memory device may be configured to further store state information of states of input and output devices, and values of a timer, a counter, and other internal devices. The second memory device may be, for example, a random access memory (RAM).

The CPU may be configured to control communication between modules that implement logic and convert an input signal into an output operation signal. The CPU may operate based on the system program stored in the first memory device. The CPU may be configured to manipulate data based on the user program stored in the second memory device.

When the PLC operates, the CPU may be configured to scan current input conditions and the data and store them in a memory device. Next, the CPU may be configured to read and execute the user program step by step and then transmit a result to one of an output module, a communication module, and a memory device.

The input module and the output module perform isolation and signal conditioning and thus sensors and actuators may be directly connected to the input module and the output module without other circuits. The input module and the output module may be configured to transmit data between the CPU and an external device.

Conditions and data of industrial devices and production processes may be transmitted to the CPU through the input module. A result of processing performed by the CPU may be transmitted to an actuator through the output module. The input module may include, for example, a mechanical switch for position sensing, a proximity switch, a photoelectric switch, an encoder, a temperature and pressure switch, a potentiometer, a linear variable differential transformer, a strain gauge, a thermistor, a thermal transistor, and digital and analog devices such as an AC/DC thermocouple switch. The input module may provide an interface between the input device and a CPU operating based on a low DC voltage. Some input devices may generate an analog signal that is in a high-voltage range. The input module may be configured to convert the signal generated by the input device into a voltage that is in a range acceptable by the CPU.

The output module may be configured to generate a signal for control of an operation of an actuator. The output module may include a relay, a transistor, and a triac. The output module may include a relay, a contactor, a solenoid valve, a motor, and the like.

However, the above components are provided for convenience of description, and the processor 133, the first controller 141, the second controller 143, the server 151, the server 152, the server 153, the server 154, the server 155, and the server 156 described above may also result from computing devices, distributed computing devices, processors, firmware, software, routines, and other devices executing routines, and instructions.

An architecture configured to generate a roll map and an intermediate roll map may be implemented by adding only the first controller 141 to the second controller 143 and the servers 151 to 156, which are essential elements in modern process management systems. That is, in the roll map generating system 100 according to example embodiments, resources of an already-installed manufacturing site can be used and additional capital expenditure can be reduced. In addition, applying the same architecture as existing manufacturing equipment to newly constructed manufacturing equipment may lead to improvement of the reliability of the manufacture of a secondary battery, detection/improvement of problematic processes, and effective introduction of new processes.

Those of ordinary skill in the art would be able to easily derive a roll map generating system including an integrated PLC performing the functions of each of the first controller 141 and the second controller 143 and a roll map generation system including an integrated server performing the functions of each of the servers 151 to 156, based on the above description.

### (Second Embodiment)

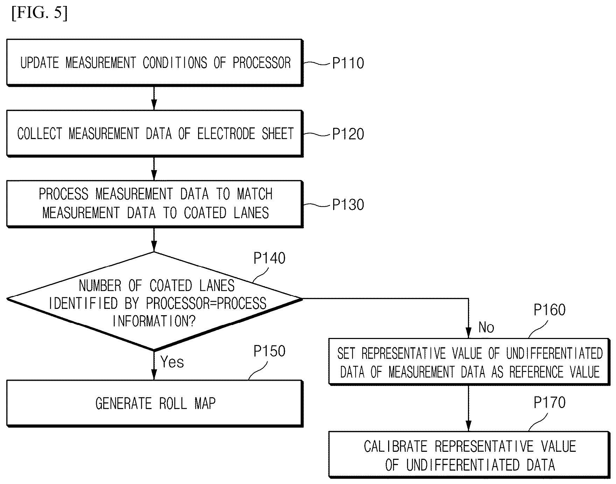

FIG. 5 is a flowchart of a roll map generating method according to example embodiments.

Referring to FIGS. 1, 2, and 5, in P110, measurement conditions of the processor 133 may be updated. In the present example, the measurement conditions of the processor 133 may be updated based on the electrode specification file ESF. The updating of the measurement conditions may include updating the number of the coated lanes L1, L2, and L3, the number of uncoated parts U1, U2, U3, and U4, the width of each of the coated lanes L1, L2, and L3, the width of each of the uncoated parts U1, U2, U3, and U4, and the range of normal measurement amounts (i.e., loading amounts or thicknesses).

The electrode specification file ESF may be generated based on the electrode specification data ESD. The server 155 may be configured to generate the electrode specification file ESF based on the electrode specification data ESD of the server 156. The electrode specification file ESF may be, for example, in a JSON file format but is not limited thereto. The electrode specification file ESF may be transmitted from the server 155 to the processor 133 via the server 152. The electrode specification file ESF may be transmitted to the processor 133 by a message transmission method such as unicast.

Next, in P120, measurement data of the electrode sheet ES may be collected. Measurement data MED of the electrode sheet ES may be collected by the processor 133 based on a measurement signal MS. The measurement signal MS may be generated by scanning the electrode sheet ES by the sensing part 131 of the measuring device 130.

Next, in P130, the measurement data may be processed. The processing of the measurement data may include matching the measurement data to the sections S11, S12, S13, S14, S15, S16, S17, S21, S22, S23, S24, S25, S26, S27, S31, S32, S33, S34, S35, S36, and S37, and calculating representative values of the sections S11, S12, S13, S14, S15, S16, S17, S21, S22, S23, S24, S25, S26, S27, S31, S32, S33, S34, S35, S36, and S37. The measurement data may be processed by the processor 133 to generate the coordinate-related measurement data CMD. The coordinate-related measurement data CMD may include a representative value of each of the sections S11, S12, S13, S14, S15, S16, S17, S21, S22, S23, S24, S25, S26, S27, S31, S32, S33, S34, S35, S36, and S37 of the electrode sheet ES, and representative coordinates (e.g., a start coordinate and an end coordinate) matching the representative value.

Those of ordinary skill in the art would be able to easily derive an embodiment in which the first controller 141 collects the coordinate-related measurement data CMD based the above description. In this case, the processor 133 may calculate representative values of the sections S11, S12, S13, S14, S15, S16, S17, S21, S22, S23, S24, S25, S26, S27, S31, S32, S33, S34, S35, S36, and S37 and transmit the representative values to the first controller 141. The first controller 141 may be configured to match the representative values of the sections S11, S12, S13, S14, S15, S16, S17, S21, S22, S23, S24, S25, S26, S27, S31, S32, S33, S34, S35, S36, and S37 to the representative coordinates (e.g., the start coordinate and the end coordinate) thereof.

Next, in P140, the number of the plurality of coated lanes L1, L2, and L3 identified by the processor 133 may be compared with process information. More specifically, the number of the plurality of coated lanes L1, L2, and L3 identified by the processor 133 may be compared with the number of the plurality of coated lanes L1, L2, and L3 of the measurement conditions updated according to the electrode specification file ESF. The above-described comparison may be performed by the processor 133. Through the above-described comparison, the quality of the electrode sheet ES or the reliability of measurement performed by the measuring device 130 may be improved.

In P150, when the number of the plurality of coated lanes L1, L2, and L3 identified by the processor 133 is equal to the number of coated lanes of the process information, a roll map may be generated. The roll map may be generated by the server 154. The generation of the roll map may include collecting the coordinate-related measurement data CMD, additional coordinate-related measurement data, and inspection data and storing them in a database inside or outside the server 154.

In P160, when the number of the coated lanes L1, L2, and L3 identified by the processor 133 is not equal to the number of the coated lanes of the process information, a representative value of undifferentiated data of the measurement data MED may be set as a reference value. The third to fifth parts POR3', POR4', and POR5' of FIG. 4 are examples of the undifferentiated data of the measurement data MED.

Next, in P170, the representative value of the undifferentiated data may be calibrated. The representative value of the undifferentiated data may be calibrated based on an adjacent representative value as described above. For example, the representative value of the scanning region S3 may be calibrated based on the representative value of the scanning region S2 adjacent to the scanning region S3. As another example, the representative value of the scanning region S3 may be calibrated based on the representative value of the scanning region S1 spaced apart from the scanning region S3 with the scanning region S2 interposed therebetween. As another example, the representative value of the scanning region S3 may be calibrated based on representative values of two or more scanning regions, e.g., the scanning regions S1 and S2. Accordingly, the representative value of the scanning region S3 set as a reference value may be set to a representative value of the scanning region S1, a representative value of the scanning region S2, or a mean of the representative values of the scanning regions S1 and S2.

### (Third Embodiment)

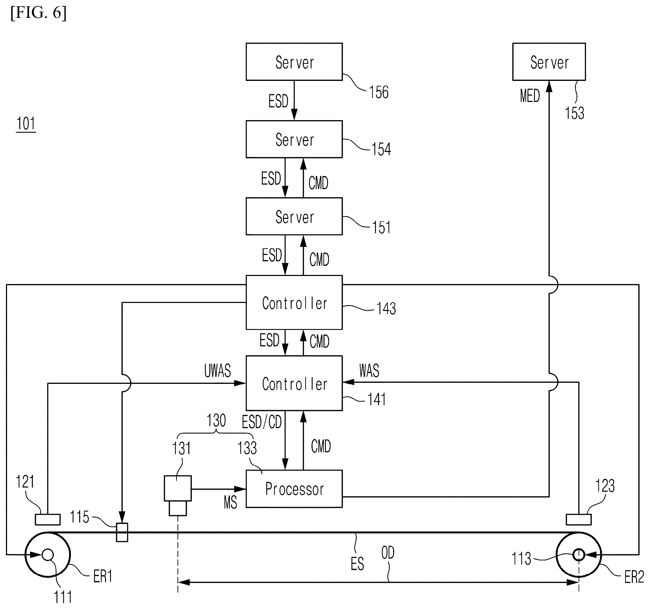

FIG. 6 is a diagram for describing a roll map generating system 101 according to other example embodiments.

Referring to FIG. 6, the roll map generation system 100 may include an unwinder 111, a rewinder 113, a processing apparatus 115, a first rotary encoder 121, a second rotary encoder 123, a measuring device 130, a first controller 141, a second controller 143, and servers 151, 153, 154, and 156.

The unwinder 111, the rewinder 113, the processing apparatus 115, the first rotary encoder 121, the second rotary encoder 123, the measuring device 130, the first controller 141, the second controller 143, and the servers 151, 153, 154, and 156 are substantially the same as those described above with reference to FIGS. 1 to 4, and thus, a description thereof is omitted here.

Referring to FIG. 6, in the roll map generation system 101, the measurement conditions of the processor 133 of the measuring device 130 may be updated based on the electrode specification data ESD. The electrode specification data ESD may be transmitted from the server 156 to the processor 133 via the server 154, the server 151, the second controller 143, and the first controller 141.

### (Fourth Embodiment)

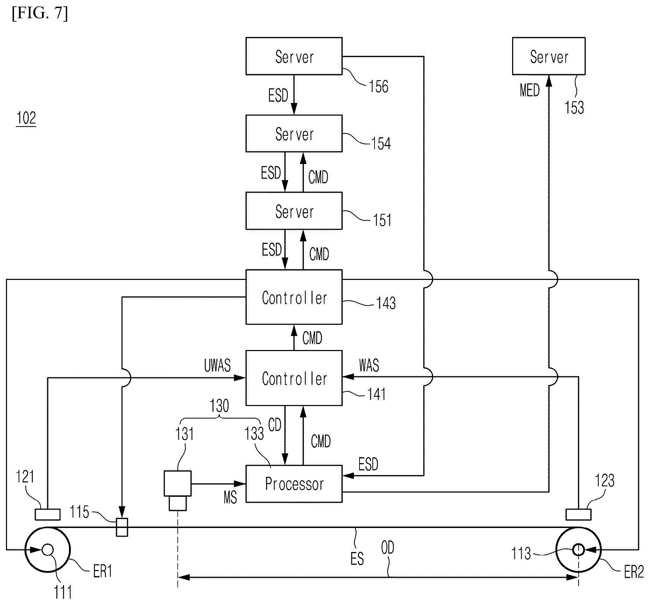

FIG. 7 is a diagram for describing a roll map generating system 102 according to other example embodiments.

Referring to FIG. 7, the roll map generation system 102 may include an unwinder 111, a rewinder 113, a processing apparatus 115, a first rotary encoder 121, a second rotary encoder 123, a measuring device 130, a first controller 141, a second controller 143, and servers 151, 153, 154, and 156.

The unwinder 111, the rewinder 113, the processing apparatus 115, the first rotary encoder 121, the second rotary encoder 123, the measuring device 130, the first controller 141, the second controller 143, and the servers 151, 153, 154, and 156are substantially the same as those described above with reference to FIGS. 1 to 4, and thus, a description thereof is omitted here.

Referring to FIG. 7, the roll map generation system 102 may include a dedicated communication line between the server 156 and the processor 133. The roll map generating system 102 is substantially the same as the roll map generation system 100 of FIG. 1. Accordingly, electrode specification data ESD of the server 156 may be directly transmitted from the server 156 to the processor 133 through the dedicated communication line between the server 156 and the processor 133. Measurement conditions of the processor 133 of the measuring device 130 may be updated based on the electrode specification data ESD directly transmitted from the server 156.

### (Fifth Embodiment)

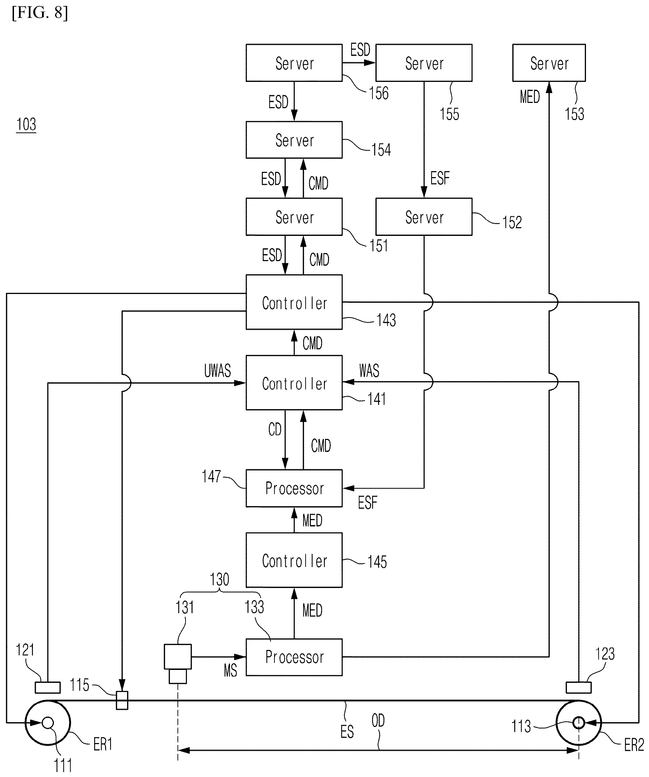

FIG. 8 is a diagram for describing a roll map generating system 103 according to other example embodiments.

Referring to FIG. 8, the roll map generating system 103 may include an unwinder 111, a rewinder 113, a processing apparatus 115, a first rotary encoder 121, a second rotary encoder 123, a measuring device 130, a first controller 141, a second controller 143, a third controller 145, a processor 147, and communication servers 151 to 156.

The unwinder 111, the rewinder 113, the processing apparatus 115, the first rotary encoder 121, the second rotary encoder 123, the measuring device 130, the first controller 141, the second controller 143, and the servers 151 to 156 are substantially the same as those described above with reference to FIG. 1, and thus, a description thereof is omitted here.

The third controller 145 may be, for example, a PLC. The third controller 145 may be configured to relay communication between a processor 133 and the processor 147. The third controller 145 may be configured to transmit data about processing, driving, and stopping of an electrode sheet ES to the processor 133.

The processor 133 is substantially the same as that of FIG. 1 but may not collect coordinate-related measurement data CMD. The processor 133 may be configured to transmit measurement data MED collected based on a measurement signal MS to the third controller 145. An electrode specification file ESF may be transmitted to the processor 147 through the server 152, and measurement conditions of the processor 147 may be updated based on the electrode specification file ESF.

The processor 147 may be configured to receive the measurement data MED and coordinate data CD. The processor 147 may be configured to collect coordinate-related measurement data CMD based on the measurement data MED and the coordinate data CD. The collection of the coordinate-related measurement data CMD is substantially the same as that described above with reference to FIGS. 1 to 5, except that the coordinate-related measurement data CMD is collected by the processor 147, and thus, a redundant description thereof is omitted here.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A roll map generating method comprising following steps:
collecting measurement data based on a measurement signal generated by measuring an electrode sheet, wherein the measurement data includes measured values of the electrode sheet, and the electrode sheet includes a plurality of coated lanes and a plurality of uncoated parts; and
processing the measurement data to differentiate the plurality of coated lanes from each other.

2. The roll map generating method of claim 1, wherein determining the number of the plurality of coated lanes in the step of processing of the measurement data.

3. The roll map generating method of claim 2, further comprising a step of comparing the number of the plurality of coated lanes determined by processing the measurement data with process information of the electrode sheet.

4. The roll map generating method of claim 3, further comprising a step of, when the number of the plurality of coated lanes determined by processing the measurement data is different from the process information of the electrode sheet, setting a representative value of undifferentiated data of the measurement data as a reference value.

5. The roll map generating method of claim 4, wherein the number of the plurality of coated lanes determined by processing the measurement data is less than the number of the plurality of coated lanes of the process information of the electrode sheet.

6. The roll map generating method of claim 4, further comprising a step of calibrating the representative value of the undifferentiated data of the measurement data.

7. The roll map generating method of claim 1, wherein the electrode sheet includes a first section and a second section,
wherein the number of the plurality of coated lanes determined from the measurement data of the first section is the same as process information of the electrode sheet,
the number of the plurality of coated lanes determined from the measurement data of the second section is different from the process information of the electrode sheet, and
a representative value of the measurement data of the second section is calibrated based on a representative value of the measurement data of the first section.

8. The roll map generating method of claim 7, wherein the first section and the second section are neighboring to each other.

9. The roll map generating method of claim 1, wherein the electrode sheet includes a first section to a third section,
wherein the number of the plurality of coated lanes determined from the measurement data of the first and second sections is the same as the process information of the electrode sheet,
the number of the plurality of coated lanes determined from the measurement data of the third section is different from the process information of the electrode sheet, and
a representative value of the measurement data of the third section is calibrated based on representative values of the measurement data of the first and second sections.

10. The roll map generating method of claim 9, wherein the representative value of the measurement data of the third section is set to a mean of the representative values of the measurement data of the first and second sections.

11. The roll map generating method of claim 9, wherein a width of each of the plurality of coated lanes of the third section is determined based on the process information.

12. The roll map generating method of claim 1, wherein the electrode sheet includes a first section to a third section,
wherein the number of the plurality of coated lanes determined from the measurement data of the first and second sections is the same as process information of the electrode sheet,
the number of the plurality of coated lanes determined from the measurement data of the third section is different from the process information of the electrode sheet, and
a representative value of the measurement data of the third section is calibrated based on a representative value of the measurement data of the first section.

13. The roll map generating method of claim 12, wherein the first section is spaced apart from the third section with the second section therebetween.

14. The roll map generating method of claim 12, wherein the representative value of the third section is set to the representative value of the first section.
